# EUROPEAN PATENT SPECIFICATION

(11) **EP 4 570 417 B1**
(45) Date of publication and mention of the grant of the patent: **30.09.2026**
(21) Application number: 23852433.4
(22) Date of filing: 01.08.2023
(51) Int. Cl.: B23K 26/38, B23K 26/08, B23K 101/18

(54) **LASER CUTTING METHOD**
LASERSCHNEIDVERFAHREN
PROCÉDÉ DE DÉCOUPE PAR LASER

(30) Priority: 08.08.2022 JP 2022126411
(43) Date of publication of application: 18.06.2025
(73) Proprietor: Amada Co., Ltd., Isehara-shi, Kanagawa 259-1196 (JP)
(72) Inventor: TAKANO Hiroshi, Isehara-shi, Kanagawa 259-1196 (JP); NOMURA Takumi, Isehara-shi, Kanagawa 259-1196 (JP); ITO Sonoka, Isehara-shi, Kanagawa 259-1196 (JP)
(74) Representative: Grünecker Patent- und Rechtsanwälte PartG mbB
(86) International application number: PCT/JP2023/028097
(87) International publication number: WO 2024/034462

(56) References cited:
- WO-A1-2020/059533
- JP-A- 2016 068 144
- JP-A- 2020 069 482
- JP-A- S6 358 506

## Description

The present invention relates to a laser cutting method of cutting a sheet metal with a laser beam according to the preamble of claim 1 (see for example WO 2020/059533 A1) .

### [BACKGROUND ART]

When a laser processing machine is used to cut a sheet metal for producing a part, joints that are kept uncut by small distances may be formed at a plurality of positions on an outer periphery of the part to prevent the part from being separated and falling from the sheet metal. To remove the part, which is still connected to the sheet metal with such joints, it is necessary to cut the joints by a tool, and traces after cutting the joints are likely to remain on the outer periphery of the part.

Patent Literature 1 and 2 describe the following laser cutting method to solve the problem with the above-mentioned joints. The laser processing machine forms, at each of a plurality of positions around the part to be cut out from the sheet metal, an L-shaped slit including a first slit that is apart from the outer periphery of the part by a predetermined distance and is parallel to the outer periphery, and a second slit that extends from an end of the first slit toward the outer periphery of the part, and then cuts the outer periphery of the part. As a result, residual stress generated by formation of the L-shaped slits is released due to cutting of the outer periphery of the part, and free ends of rectangular regions sandwiched by the L-shaped slits and the slits resulting from cutting the outer periphery of the part are bent toward the part and press the part. That is, the rectangular regions at the plurality of positions around the part act as pressing pieces pressing the part to hold the part to the sheet metal.

Further, Patent Literature 2 describes that, by adjusting overlap amounts of the second slits and kerfs formed by cutting the outer periphery of the part, the free ends of the pressing pieces are welded to the part, to increase force for holding the part to the sheet metal. That is, the rectangular regions at the plurality of positions around the part described in Patent Literature 2 act as pressing welding pieces for pressing the part and being welded to the part, thereby holding the part to the sheet metal.

A further example relating to laser processing is disclosed in JP2020-69482 A.

### [Citation List]

### [Patent Literature]

[Patent Literature 1] Japanese Patent No. 6524368
[Patent Literature 2] Japanese Patent No. 6638043

### [SUMMARY OF INVENTION]

When the method of holding the part disclosed in Patent Literature 1 and 2 is used, the part can be removed from the sheet metal manually or by vacuum suction by a conveyance device. However, when the part is removed from the sheet metal, bending moment becomes maximum at root parts of the pressing pieces (or pressing welding pieces) connected to the sheet metal. Therefore, the pressing pieces deform from the respective root parts, and free ends of the pressing pieces rise. A plurality of skeletons resulting from cutting and removing a plurality of parts from the sheet metal are stacked for conveyance. At this time, only a limited number of skeletons can be stacked because of the raised pressing pieces.

The present invention is defined in independent claim 1. Preferred embodiments are laid down in the dependent claims. The present invention provides a laser cutting method including: forming, at each of a plurality of positions on an outer periphery or an inner periphery of a part to be cut out from a sheet metal, a first slit by cutting, with a laser beam, the sheet metal from a first point that is apart from an end of the part in an outward direction of the part by a first distance, to a second point that is apart from the end in the outward direction of the part by a second distance shorter than the first distance and is apart from the first point in a direction along the end by a third distance; forming a second slit by cutting the sheet metal with the laser beam, to cause the second slit to extend from the second point toward the end and to reach a kerf formation region where a kerf for cutting the outer periphery or the inner periphery is formed; and cutting the sheet metal with the laser beam along the end, to form the kerf in the kerf formation region, wherein the first slit is formed as a linear slit inclined relative to the end, so that the first slit is closer to the end when it is traced from the first point to the second point.

According to the present invention, the first distance is longer than the second distance. Therefore, when the part is removed from the sheet metal, a rising height of a free end of the pressing piece that is a region surrounded by the first slit, the second slit, and the kerf is reduced. Further, twist in which the pressing piece rotates in an inward direction of the part is reduced, and a skeleton hardly overlaps with the pressing piece. Accordingly, it is possible to increase the number of stacked skeletons after the part is removed from the sheet metal.

The laser cutting method according to one or more embodiments makes it possible to reduce the rising height of the pressing piece when the part is removed from the sheet metal.

### [BRIEF DESCRIPTION OF DRAWINGS]

[FIG. 1] FIG. 1 is a block diagram illustrating a processing program creation device and a laser processing machine performing a laser cutting method according to one or more embodiments.
[FIG. 2] FIG. 2 is a diagram illustrating a specific configuration example of the laser processing machine.
[FIG. 3A] FIG. 3A is a partial plan view illustrating a state in which a plurality of pressing piece formation slits are formed on an outer peripheral end of a part cut out from a sheet metal by the laser cutting method according to one or more embodiments.
[FIG. 3B] FIG. 3B is a partial plan view illustrating a state in which a plurality of pressing pieces are formed on the outer peripheral end of the part cut out from the sheet metal by the laser cutting method according to one or more embodiments.
[FIG. 4] FIG. 4 is a partial enlarged view illustrating a portion of one of the pressing piece formation slits illustrated in FIG. 3A in an enlarged manner.
[FIG. 5] FIG. 5 is a partial enlarged view illustrating a portion where one of the pressing pieces illustrated in FIG. 3B presses the part, in an enlarged manner.
[FIG. 6] FIG. 6 is a diagram illustrating detailed positional relationship between a second slit and a kerf formation region around the part, formed in the sheet metal by the laser cutting method according to one or more embodiments.
[FIG. 7] FIG. 7 is a partial enlarged view illustrating a portion of a pressing piece formation slit from which an approach slit is omitted, in an enlarged manner.
[FIG. 8] FIG. 8 is a partial enlarged view illustrating a portion of a pressing piece formation slit for forming a pressing piece having a rectangular shape, according to the prior art and not falling under the claimed scope, in an enlarged manner.
[FIG. 9A] FIG. 9A is a partial perspective view illustrating a rising height of a free end of a pressing piece having a tapered shape when a part around which the pressing piece is formed is removed from the sheet metal.
[FIG. 9B] FIG. 9B is a partial perspective view illustrating a rising height of a free end of a pressing piece having a rectangular shape, according to the prior art and not falling under the claimed scope, when a part around which the pressing piece is formed is removed from the sheet metal.
[FIG. 10] FIG. 10 is a characteristic diagram illustrating change in holding force when a width of a root part is changed in each of the pressing piece having the tapered shape and the pressing piece having the rectangular shape.
[FIG. 11] FIG. 11 is a partial enlarged view illustrating a first modification of the pressing piece formation slit.
[FIG. 12] FIG. 12 is a partial enlarged view illustrating a second modification of the pressing piece formation slit.
[FIG. 13] FIG. 13 is a partial enlarged view illustrating a portion where the pressing piece having the tapered shape is formed at an arc-shaped end of a part, in an enlarged manner.
[FIG. 14] FIG. 14 is a partial plan view illustrating a state in which a plurality of pressing pieces are formed on an inner peripheral end of a part cut out from a sheet metal by the laser cutting method according to one or more embodiments.

### [DESCRIPTION OF EMBODIMENTS]

A laser cutting method according to one or more embodiments includes a first step of forming, at each of a plurality of positions on an outer periphery or an inner periphery of a part to be cut out from a sheet metal, a first slit by cutting, with a laser beam, the sheet metal from a first point that is apart from an end of the part in an outward direction of the part by a first distance, to a second point that is apart from the end in the outward direction of the part by a second distance shorter than the first distance and is apart from the first point in a direction along the end by a third distance.

The laser cutting method according to one or more embodiments further includes, subsequent to the first step, a second step of forming a second slit by cutting the sheet metal with the laser beam, to cause the second slit to extend from the second point toward the end and to reach a kerf formation region where a kerf for cutting the outer periphery or the inner periphery is formed. The laser cutting method according to one or more embodiments further includes, subsequent to the second step, a third step of cutting the sheet metal with the laser beam along the end, to form the kerf in the kerf formation region.

The laser cutting method according to one or more embodiments will be described below in detail with reference to accompanying drawings.

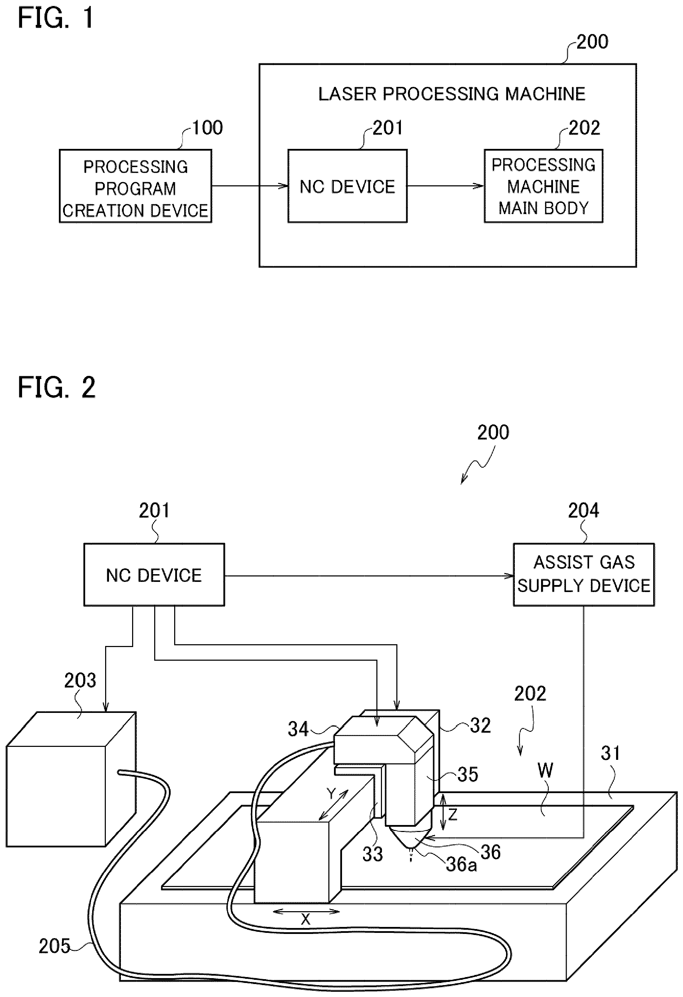

FIG. 1 illustrates a processing program creation device 100, and a laser processing machine 200 performing the laser cutting method according to one or more embodiments. The processing program creation device 100 creates a processing program for processing a sheet metal by the laser processing machine 200. The processing program creation device 100 can be constituted of a computing device that performs a CAM (Computer Aided Manufacturing) program to create a processing program. The laser processing machine 200 includes a Numerical Control (NC) device 201 and a processing machine main body 202. The NC device 201 controls the processing machine main body 202 based on the processing program.

The processing program created by the processing program creation device 100 may be stored in an unillustrated processing program database, and the NC device 201 may read out the processing program from the processing program database.

FIG. 2 illustrates a specific configuration example of the laser processing machine 200. In FIG. 2, the laser processing machine 200 includes a laser oscillator 203 and an assist gas supply device 204 that are not illustrated in FIG. 1. The laser oscillator 203 generates and emits a laser beam. Typically, the laser oscillator 203 is a fiber laser oscillator emitting a laser beam having a wavelength of 1060 nm to 1080 nm.

The processing machine main body 202 includes a processing table 31 on which a sheet metal W to be processed is placed, a gate-type X-axis carriage 32, a Y-axis carriage 33, a collimator unit 34 and a processing head 35 fixed to the Y-axis carriage 33, and a nozzle 36 attached to the processing head 35.

The laser beam emitted from the laser oscillator 203 is transmitted to the collimator unit 34 through a process fiber 205. The collimator unit 34 includes a collimating lens, and converts the laser beam of divergent light into a laser beam of collimated light. The processing head 35 includes a focusing lens, and the focusing lens focuses the laser beam of the collimated light. The processing head 35 irradiates the sheet metal W with the laser beam of the focused light through a circular opening 36a provided at a tip of the nozzle 36, thereby cutting the sheet metal W.

The X-axis carriage 32 is configured to be movable in an X-axis direction on the processing table 31. The Y-axis carriage 33 is configured to be movable in a Y-axis direction perpendicular to the X-axis on the X-axis carriage 32. The X-axis carriage 32 and the Y-axis carriage 33 function as moving mechanisms that move the processing head 35 in the X-axis direction, the Y-axis direction, or an optional synthetic direction of the X-axis and the Y-axis along a surface of the sheet metal W. When the processing head 35 irradiates the sheet metal W with the laser beam while the X-axis carriage 32 and the Y-axis carriage 33 move the processing head 35 along the surface of the sheet metal W, a part having a predetermined shape can be cut out from the sheet metal W.

The assist gas supply device 204 supplies, as assist gas, nitrogen, oxygen, mixed gas of nitrogen and oxygen, or air to the processing head 35. In processing of the sheet metal W, the assist gas is blown to the sheet metal W through the opening 36a. The assist gas discharges molten metal of the sheet metal W downward from a kerf (slit) formed in the sheet metal W.

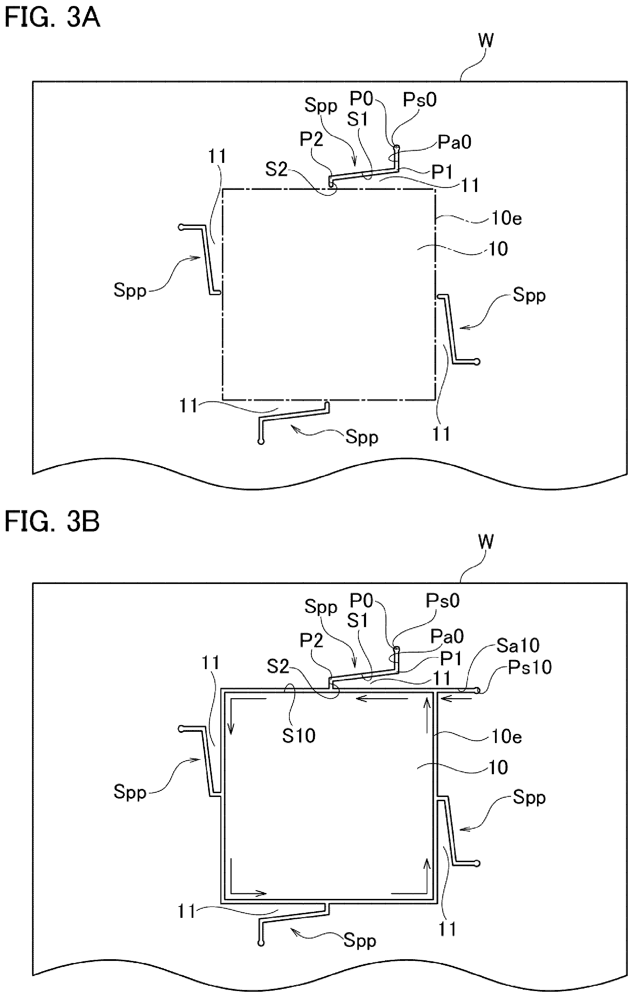

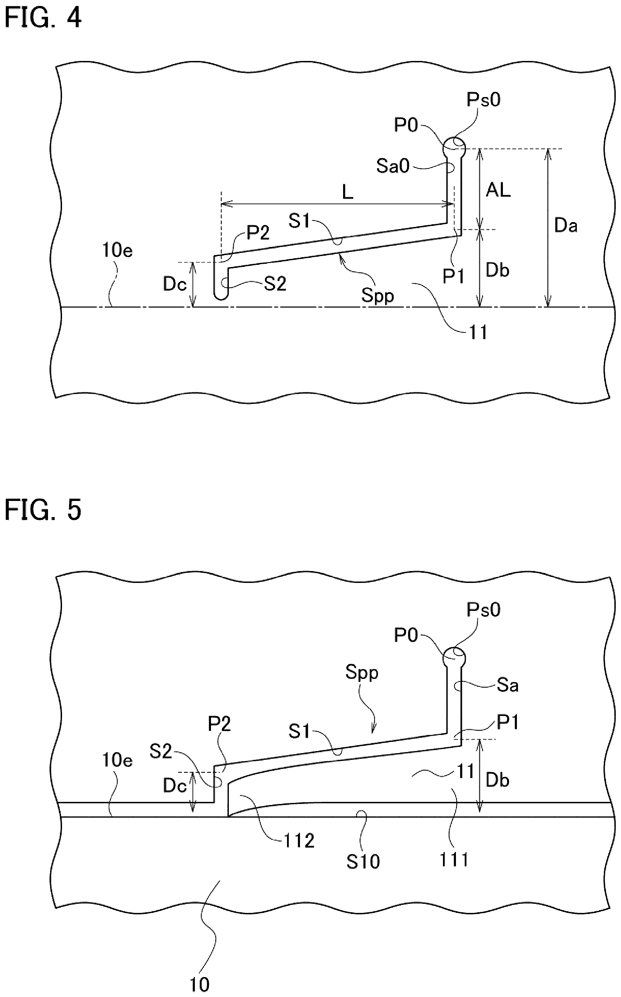

The laser cutting method performed when the laser processing machine 200 cuts the sheet metal W for producing a part 10 having a square shape will be described with reference to FIG. 3A, FIG. 3B, and FIG. 4. FIG. 3A illustrates a state in which pressing piece formation slits Spp described below are formed on an outer peripheral end of the part 10 cut out from the sheet metal W by the laser cutting method according to one or more embodiments. FIG. 3B illustrates a state in which pressing pieces 11 described below are formed on the outer peripheral end of the part 10 cut out from the sheet metal W by the laser cutting method according to one or more embodiments. FIG. 4 illustrates one of the pressing piece formation slits Spp illustrated in FIG. 3A in an enlarged manner.

In FIG. 3A, the laser processing machine 200 cuts the sheet metal W in the following manner so as to form the pressing pieces 11 at four positions around the part 10, for example.

As illustrated in FIG. 4, the laser processing machine 200 forms a pierced hole Ps0 by irradiating, with the laser beam, a point P0 that is apart from an end 10e of the part 10 in a direction orthogonal to the end 10e by a predetermined distance Da. The end 10e of the part 10 illustrated in FIG. 3A is an outer peripheral end of the part 10. Subsequently, the laser processing machine 200 cuts the sheet metal W by moving, in the direction orthogonal to the end 10e, the laser beam from the point P0 to a point P1 that is apart from the end 10e in the direction orthogonal to the end 10e by a distance Db (first distance) . As a result, an approach slit Sa0 from the pierced hole Ps0 to the point P1 is formed. The distance Db is a distance shorter than the distance Da. A length of the approach slit Sa0 (approach length) is AL.

Next, the laser processing machine 200 cuts the sheet metal W by moving the laser beam from the point P1 to a point P2 that is apart from the end 10e in the direction orthogonal to the end 10e by a distance Dc (second distance) and is apart from the point P1 in a direction along the end 10e by a distance L (third distance). As a result, a first slit S1 from the point P1 to the point P2 is formed. The distance Dc is a distance shorter than the distance Db. The first slit S1 is not parallel to the end 10e, and is inclined, so that the first slit S1 is closer to the end 10e when it is traced from the point P1 to the point P2. The first slit S1 illustrated in FIG. 3A and FIG. 3B is a slit having a linear shape inclined relative to the end 10e.

The laser processing machine 200 cuts the sheet metal W by moving the laser beam from the point P2 toward the end 10e in the direction orthogonal to the end 10e. As a result, a second slit S2 extending from the point P2 to a vicinity of the end 10e is formed. The vicinity of the end 10e indicates a region where a kerf for cutting the outer periphery of the part 10 is formed (hereinafter, kerf formation region). As described below, the laser processing machine 200 cuts the sheet metal W such that a tip of the second slit S2 reaches the kerf formation region. The whole of the approach slit Sa0, the first slit S1, and the second slit S2 is referred to as the pressing piece formation slit Spp for forming the pressing piece 11.

As illustrated in FIG. 3B, the laser processing machine 200 forms a pierced hole Ps10 by irradiating a position that is apart from the end 10e of the part 10 with the laser beam. Subsequently, the laser processing machine 200 cuts the sheet metal W by moving the laser beam from the pierced hole Ps10 toward the end 10e. As a result, an approach slit Sa10 is formed. Further, the laser processing machine 200 cuts the entire outer periphery of the part 10 by moving the laser beam along the end 10e in directions indicated by arrows. As a result, a kerf S10 that is a slit surrounding the entire part 10 is formed on the outer periphery of the part 10. The cutting direction indicated by the arrow when the kerf S10 is formed is the direction same as a vector component in a direction parallel to the end 10e in the cutting direction when the first slit S1 is formed.

A processing condition for forming the pressing piece formation slit Spp and a processing condition for forming the kerf S10 may be the same processing condition. That is, the laser processing machine 200 cuts the sheet metal W by using a processing condition number (E number) for designating the same processing condition when the pressing piece formation slit Spp is formed and when the kerf S10 is formed.

FIG. 5 illustrates a portion where one of the pressing pieces 11 illustrated in FIG. 3B presses the part 10, in an enlarged manner. When the laser processing machine 200 forms the kerf S10 on the outer periphery of the part 10 as illustrated in FIG. 3B, a region sandwiched by the first slit S1, the second slit S2, and the kerf S10 becomes the pressing piece 11 having the tapered shape in which a root part 111 is connected to the sheet metal W as shown in FIG. 5. A width of the root part 111 of the pressing piece 11 is determined by the distance Db, and a width of a free end 112 on a tip side is determined by the distance Dc. When the kerf S10 is formed on the outer periphery of the part 10, residual stress generated by formation of the first slit S1 and the second slit S2 is released, and the free end 112 is bent toward the part 10 to press the part 10.

In FIG. 3B, two pairs of pressing pieces 11 facing each other press the part 10 in directions facing each other to hold the part 10 to the sheet metal **W.**

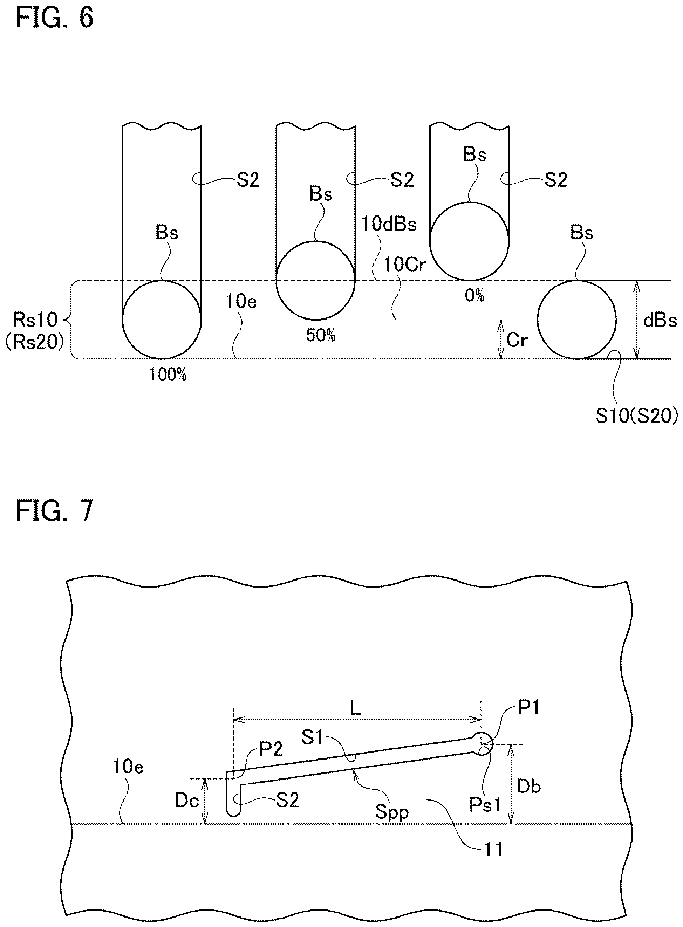

FIG. 6 illustrates detailed positional relationship between the tip of the second slit S2 and the kerf formation region (kerf S10). When the laser processing machine 200 cuts the end 10e of the part 10, the laser processing machine 200 performs control such that a center of a beam spot Bs moves on a line 10Cr shifted outward from the end 10e by a tool radius compensation amount Cr as a radius of the beam spot Bs. A region sandwiched by the end 10e of the part 10 and a line 10dBs shifted outward from the end 10e by a diameter dBs of the beam spot Bs is a kerf formation region Rs10.

A state in which a tip of the beam spot Bs during formation of the second slit S2 reaches the end 10e of the part 10 and the beam spot Bs completely overlaps with the width of the kerf formation region Rs10 is defined as an overlap amount of 100%. An end point coordinate of the second slit S2 at this time is positioned on the line 10Cr. A state in which the tip of the beam spot Bs during formation of the second slit S2 reaches the line 10Cr and the beam spot Bs half overlaps with the width of the kerf formation region Rs10 is defined as an overlap amount of 50%. The end point coordinate of the second slit S2 at this time is positioned on the line 10dBs.

A state in which the tip of the beam spot Bs during formation of the second slit S2 reaches the line 10dBs and the beam spot Bs does not overlap with the width of the kerf S10 is defined as an overlap amount of 0%. The end point coordinate of the second slit S2 at this time is a position shifted from the line 10dBs on the front side of the line 10dBs by a distance of the radius of the beam spot Bs. The fact that the laser processing machine 200 cuts the sheet metal W such that the tip of the second slit S2 reaches the kerf formation region Rs10 means that the overlap amount of the beam spot Bs and the kerf formation region Rs10 during formation of the second slit S2 is 0% or more and 100% or less.

Only to achieve an action in which the pressing piece 11 presses the part 10, the overlap amount of the second slit S2 and the kerf S10 may be any overlap amount from 0% to 100%. When the tip of the beam spot Bs during formation of the second slit S2 is positioned within the kerf formation region Rs10, the free end 112 of the pressing piece 11 can be welded to the part 10, and force for holding the part 10 to the sheet metal W can be increased. At this time, the pressing piece 11 acts as a pressing welding piece. To maximize the force for holding the part 10 obtained by adding holding force by welding of the pressing piece 11 to pressing force by curvature of the pressing piece 11, the overlap amount is preferably set to 100%.

FIG. 7 illustrates the pressing piece formation slit Spp from which the approach slit Sa0 is omitted, in an enlarged manner. As illustrated in FIG. 7, the pressing piece formation slit Spp may not include the approach slit Sa0, and may include only the first slit S1 and the second slit S2. The laser processing machine 200 forms a pierced hole Ps1 at the point P1 that is apart from the end 10e of the part 10 by the distance Db, and forms the first slit S1 from the point P1 to the point P2. When a distance between the pierced hole Ps1 and the part 10 is small, sputters during formation of the pierced hole Ps1 may adhere to the part 10. As illustrated in FIG. 4, formation of the pierced hole Ps0 at the point P0 apart from the end 10e of the part 10 by the distance Da and formation of the approach slit Sa0 is to prevent the sputters from adhering to the part 10.

To achieve a purpose of forming the pressing piece (pressing welding piece) 11 having the tapered shape, it is unnecessary to form the approach slit Sa0. Therefore, the laser processing machine 200 may form the pressing piece formation slit Spp illustrated in FIG. 7 in the sheet metal W. For example, when a technique for controlling a sputter blowing-away direction as disclosed in Japanese Patent No. 6538911 is adopted, it is possible to prevent the sputters from adhering to the part 10 without forming the approach slit Sa0.

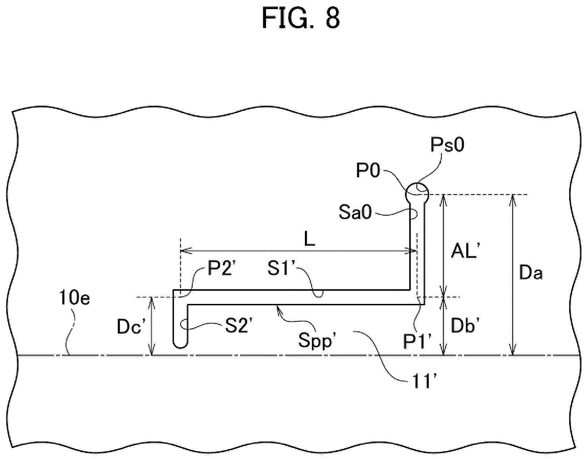

FIG. 8 illustrates a pressing piece formation slit Spp' for forming a pressing piece 11' having a rectangular shape disclosed in Patent Literature 1 or 2, in an enlarged manner. The laser processing machine 200 forms a first slit S1' parallel to the end 10e from a point P1' to a point P2'. The laser processing machine 200 forms a second slit S2' that reaches the vicinity of the end 10e from the point P2'. In FIG. 8, when the distance Da is equal to the distance Da in FIG. 4, the approach length is a length AL' that is longer than the approach length AL, a distance from the end 10e to the point P1' is a distance Db' that is shorter than the distance Db, and a distance from the end 10e to the point P2' is a distance Dc' that is greater than the distance Dc. The distance Dc' is equal to the distance Db'.

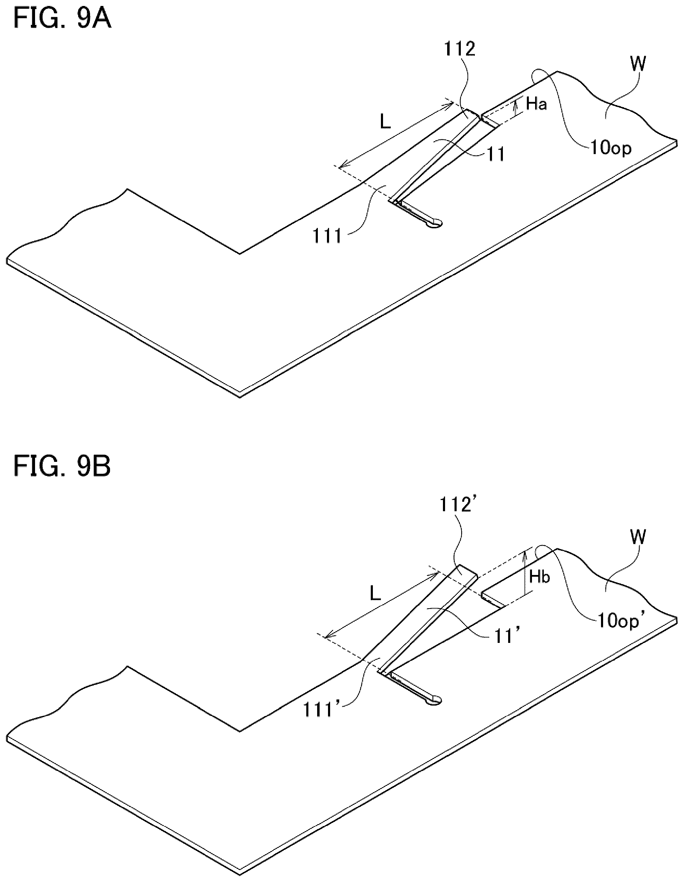

FIG. 9A partially illustrates a state in which the part 10 illustrated in FIG. 3B is removed from the sheet metal W. The part 10 is removed from the sheet metal W, and an opening 10op is formed. FIG. 9B partially illustrates a state in which a part around which the pressing piece 11' having the rectangular shape illustrated in FIG. 8 is formed is removed from the sheet metal W for comparison. The part is removed from the sheet metal W, and an opening 10op' is formed. In FIG. 9A and FIG. 9B, the length L of the pressing piece 11 and the length L of the pressing piece 11' are equal to each other, and the width of the root part 111 and a width of a root part 111' are made different from each other.

The pressing pieces 11 and 11' are respectively deformed from the root parts 111 and 111', and free ends 112 and 112' of the pressing pieces 11 and 11' rise. When the pressing piece 11 in which the width of the root part 111 is wide is used, cross-sectional secondary moment of the root part 111 can be increased, which makes it possible to suppress rising height of the pressing piece 11. The rising height of the pressing piece 11 illustrated in FIG. 9A is denoted by Ha, and the rising height of the pressing piece 11' illustrated in FIG. 9B is denoted by Hb. It has been confirmed through verification by the present inventors that the height Ha is much lower than the height Hb. Further, when the pressing piece 11 illustrated in FIG. 9A is used, twist in which the pressing piece 11 rotates in an inward direction of the part is reduced, and the skeleton hardly overlaps with the pressing piece 11.

Therefore, using the pressing piece 11 makes it possible to increase the number of stacked skeletons after the part 10 is removed from the sheet metal W, as compared with the case of using the pressing piece 11'.

Further, the following fact has been confirmed through verification by the present inventors. When the distance Dc is made shorter than the distance Dc', the holding force by welding of the pressing piece 11 to the part 10 can be increased. In a case in which the distance Db and the distance Db' are equal to each other, the holding force can be increased by using the pressing piece 11 having the distance Dc shorter than the distance Dc'.

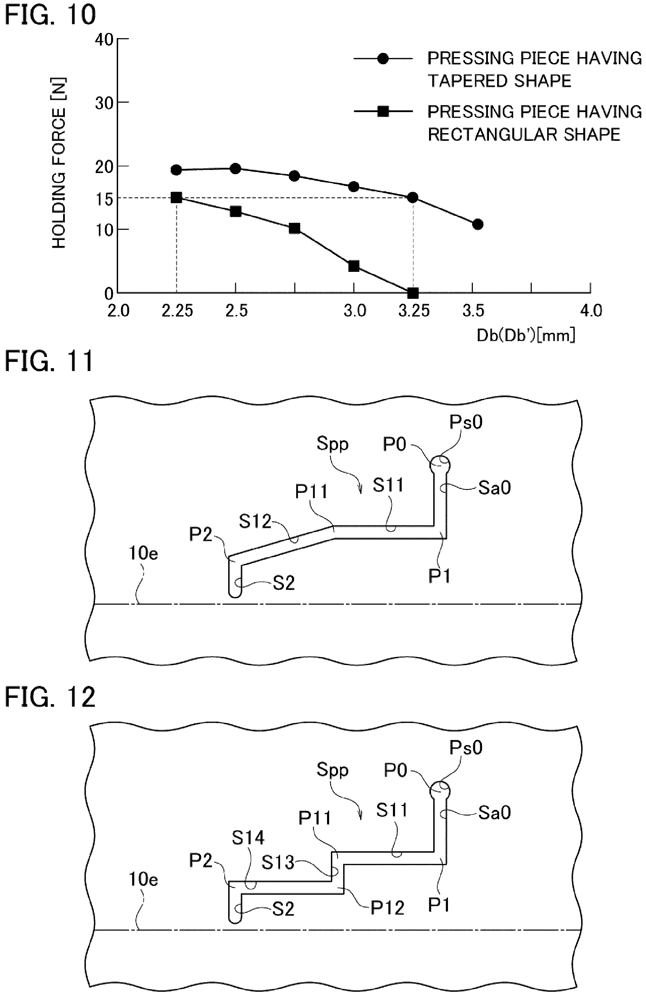

FIG. 10 illustrates change in holding force when the distances Db and Db' are changed in the pressing piece 11 having the tapered shape and the pressing piece 11' having the rectangular shape. The sheet metal W is a steel plate cold commercial (SPCC), a plate thickness of the sheet metal W is set to 1.6 mm, and the distance Dc is set to 0.6 mm. Here, as similar to FIG. 3B, force necessary for removing the part having the square shape in a state in which the part is held by the two pairs of facing pressing pieces 11 or 11' is defined as the holding force. As can be seen from FIG. 10, when the distance Db and the distance Db' are equal to each other, the holding force of the pressing piece 11 having the tapered shape is greater than the holding force of the pressing piece 11' having the rectangular shape.

When target holding force is set to 15 N, the distance Db' in the case of using the pressing piece 11' is 2.25 mm, and the distance Db in the case of using the pressing piece 11 is 3.25 mm. To obtain the same holding force, the width of the root part 111 can be made wide by 1 mm. When the width of the root part 111 is increased, the rising height Ha of the pressing piece 11 can be reduced as illustrated in FIG. 9A. Note that the target holding force is force to the extent that holding of the part 10 by the plurality of pressing pieces 11 is not released by the assist gas blown in processing of the sheet metal W.

FIG. 11 illustrates a first modification of the pressing piece formation slit Spp in an enlarged manner, and FIG. 12 illustrates a second modification of the pressing piece formation slit Spp in an enlarged manner. In the first modification, the pressing piece formation slit Spp includes, in place of the first slit S1, a slit S11 that extends from the point P1 to a point P11 and is parallel to the end 10e, and an inclined slit S12 that extends from the point P11 to the point P2. In the second modification, the pressing piece formation slit Spp includes, in place of the first slit S1, the slit S11 that extends from the point P1 to the point P11 and is parallel to the end 10e, a slit S13 that extends from the point P11 to a point P12 in a direction toward the end 10e, and a slit S14 that extends from the point P12 to the point P2 and is parallel to the end 10e.

Although not illustrated, the pressing piece formation slit Spp may include, in place of the first slit S1, an inclined slit extending from the point P1, and a slit that is continued from the inclined slit and is parallel to the end 10e.

Even in the first or second modification, the holding force by welding of the pressing piece 11 to the part 10 can be increased, and the rising height of the pressing piece 11 when the part 10 is removed from the sheet metal W can be suppressed. However, use of the first slit S1 that has the linear shape and is inclined relative to the end 10e of the part 10 is preferable because cutting of the sheet metal W is simplified. When the first slit S1 having the linear shape is used, the processing program can be simplified, and a formation time of the pressing piece formation slit Spp can be reduced.

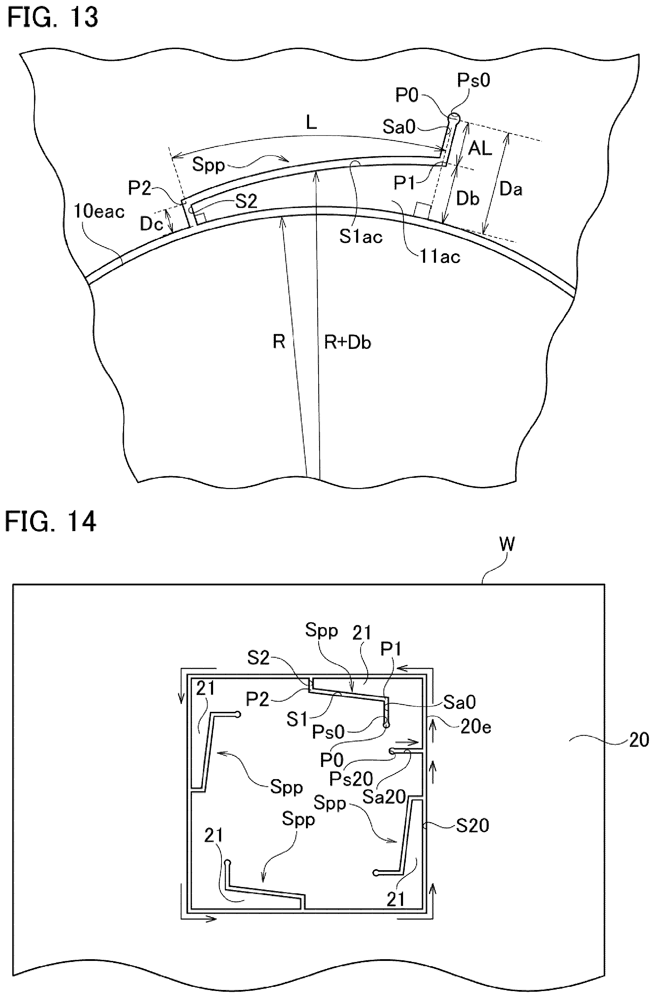

The part 10 illustrated in FIG. 3A and FIG. 3B is a part having the straight end 10e. FIG. 13 illustrates a portion where the pressing piece Spp having the tapered shape is formed at an arc-shaped end of the part, in an enlarged manner. As illustrated in FIG. 13, even in a case in which the part has an arc-shaped end 10eac, a pressing piece 11ac similar to the pressing piece 11 can be formed. In FIG. 13, the portions substantially same as the portions in FIG. 4 are denoted by the same reference numerals, and description thereof may be omitted. The pressing piece formation slit Spp illustrated in FIG. 13 includes an arc-shaped slit S1ac extending from the point P1 to the point P2. A radius of curvature of the slit S1ac is (R + Db) that is greater than a radius R of the part.

FIG. 14 illustrates a state in which pressing pieces 21 described below are formed on an inner peripheral end of a part 20 cut out from the sheet metal W by the laser cutting method according to one or more embodiments. As illustrated in FIG. 14, the laser processing machine 200 processes the sheet metal W so as to form a square opening in the sheet metal W, for example, and to form an outside of the opening as the part 20 in some cases. In FIG. 14, the portions substantially same as the portions in FIG. 3B are denoted by the same reference numerals, and description thereof may be omitted.

The laser processing machine 200 forms the pressing piece formation slits Spp along an end 20e of a region where the opening of the part 20 is formed. The end 20e of the part 20 is the inner peripheral end of the part 20. The laser processing machine 200 forms pierced holes Ps20 and approach slits Sa20 in the region where the opening is formed, thereby cutting the entire inner periphery of the part 20. Each of a kerf formation regions in FIG. 14 corresponds to a kerf formation region Rs20 illustrated in FIG. 6. Therefore, the kerf S20 is formed on the inner periphery of the part 20, and the pressing pieces 21 pressing the part 20 are formed.

Even in FIG. 14, each of the pressing piece formation slits Spp may have the shape similar to the shape of the first modification illustrated in FIG. 11 or the second modification illustrated in FIG. 12.

When the pressing piece 11' having the rectangular shape is used as the pressing piece for the part 10 or 20, and the part 10 or 20 is removed, the problem of rising of the free end 112' occurs in a case in which the sheet metal W is a thin plate having a thickness less than or equal to a predetermined plate thickness. The predetermined plate thickness is 1.6 mm, for example. Therefore, when the sheet metal W has a thickness less than or equal to the predetermined plate thickness, the pressing piece 11 having the tapered shape may be used, whereas when the sheet metal W has a thickness exceeding the predetermined plate thickness, the pressing piece 11' having the rectangular shape may be used. The width (distance Dc) of the free end 112 when the pressing piece 11 having the tapered shape is used is set to 0.6 mm, for example, irrespective of the width (distance Db) of the root part 111. The width (distance Dc') of the free end 112' when the pressing piece 11' having the rectangular shape is used is equal to the width (distance Db') of the root part 111'.

To implement the laser cutting method according to one or more embodiments described above, the processing program creation device 100 creates a processing program including the following first to third machine control codes, and the NC device 201 may control the processing machine main body 202 based on the processing program.

The first machine control code is a code for forming the first slit S1 at each of the plurality of positions on the outer periphery (inner periphery) of the part 10 (20) cut out from the sheet metal W. The first slit S1 is a slit to be cut in the sheet metal W with the laser beam from the first point P1 to the second point P2. The first point P1 is a point at a position that is apart from the end 10e (20e) of the part 10 (20) in the outward (inward) direction of the part 10 (20) by the first distance Db. The second point P2 is a point at a position that is apart from the end 10e (20e) in the outward (inward) direction of the part 10 (20) by the second distance Dc shorter than the first distance Db and is apart from the first point P1 in the direction along the end 10e (20e) by the third distance L.

The second machine control code is a code for forming the second slit S2. The second slit S2 is a slit to be cut in the sheet metal W with the laser beam so as to extend from the second point P2 toward the end 10e (20e) and to reach the kerf formation region Rs10 (Rs20) where the kerf S10 (S20) for cutting the outer periphery (inner periphery) is formed.

The third machine control code is a code for cutting the sheet metal W with the laser beam along the end 10e (20e) so as to form the kerf S10 (S20) in the kerf formation region Rs10 (Rs20).

When the sheet metal W has a thickness exceeding the above-described predetermined plate thickness, the processing program creation device 100 may create a processing program including a fourth machine control code for forming the first slit S1' parallel to the end 10e of the part 10 illustrated in FIG. 8, in place of the first machine control code for forming the first slit S1 illustrated in FIG. 4 or FIG. 7.

The present invention is not limited to the above-described one or more embodiments, and can be variously changed without departing from the scope of the present invention as defined in the appended claims. The sheet metal W may be a mild steel plate such as a steel plate cold commercial and a steel plate hot commercial (SPHC), or a stainless steel plate. The pressing piece formation slits Spp formed at the plurality of positions on the outer periphery or the inner periphery of the square or rectangular part may be provided in one pair depending on a size of the part. The pressing piece formation slits Spp formed at the plurality of positions on the outer periphery or the inner periphery of the circular part may be two, three, or four pressing piece formation slits Spp arranged at equal angular intervals.

## Claims

1. A laser cutting method comprising:
forming, at each of a plurality of positions on an outer periphery or an inner periphery of a part (10, 20) to be cut out from a sheet metal (W), a first slit (S1) by cutting, with a laser beam, the sheet metal (W)
**characterised in that**:
the cutting with the laser beam is achieved from a first point (P1) that is apart from an end (10e) of the part (10, 20) in an outward direction of the part (10, 20) by a first distance (Db), to a second point (P2) that is apart from the end (10e) in the outward direction of the part (10, 20) by a second distance (Dc) shorter than the first distance (Db) and is apart from the first point (P1) in a direction along the end (10e) by a third distance (L);
forming a second slit (S2) by cutting the sheet metal (W) with the laser beam, to cause the second slit (S2) to extend from the second point (P2) toward the end (10e) and to reach a kerf formation region (Rs10, Rs20) where a kerf (S10, S20) for cutting the outer periphery or the inner periphery is formed; and
cutting the sheet metal (W) with the laser beam along the end, to form the kerf (S10, S20) in the kerf formation region (Rs10, Rs20), wherein the first slit (S1) is formed as a linear slit inclined relative to the end (10e), so that the first slit (S1) is closer to the end (10e) when it is traced from the first point (P1) to the second point (P2).

2. The laser cutting method according to claim 1, wherein a tip of a beam spot during formation of the second slit (S2) is positioned within the kerf formation region (Rs10, Rs20).

3. The laser cutting method according to claim 2, wherein
a region surrounded by the first slit (S1), the second slit (S2), and the kerf (S10, S20) form a pressing piece (11), and
when the kerf (S10, S20) is formed, a free end (112) of the pressing piece (11) is bent toward the end (10e) to press the part (10, 20) and is welded to the part (10, 20).

## Patentansprüche

1. Ein Laserschneidverfahren, umfassend:
das Ausbilden eines ersten Schlitzes (S1) an jeder einer Vielzahl von Positionen an einem Außenumfang oder einem Innenumfang eines aus einem Blech (W) auszuschneidenden Teils (10, 20) durch Schneiden des Blechs (W) mit einem Laserstrahl, **dadurch gekennzeichnet, dass**:
das Schneiden mit dem Laser von einem ersten Punkt (P1) aus erfolgt, der von einem Ende (10e) des Teils (10, 20) in Auswärtsrichtung des Teils (10, 20) um einen ersten Abstand (Db) in Richtung vom Ende (10e) des Teils (10, 20) weg zu einem zweiten Punkt (P2) erfolgt, der vom Ende (10e) in Richtung vom Teil (10, 20) weg um einen zweiten Abstand (Dc) entfernt ist, der kürzer ist als der erste Abstand (Db), und der vom ersten Punkt (P1) in Richtung entlang des Endes (10e) um einen dritten Abstand (L) entfernt ist;
Bilden eines zweiten Schlitzes (S2) durch Schneiden des Blechs (W) mit dem Laserstrahl, sodass sich der zweite Schlitz (S2) vom zweiten Punkt (P2) in Richtung des Endes (10e) erstreckt und einen Schnittspaltbildungsbereich (Rs10, Rs20) erreicht, in dem ein Schnittspalt (S10, S20) zum Schneiden des Außenumfangs oder des Innenumfangs gebildet wird; und
Schneiden des Blechs (W) mit dem Laserstrahl entlang des Endes, um die Schnittfuge (S10, S20) im Schnittfugenbildungsbereich (Rs10, Rs20) zu bilden, wobei
der erste Schlitz (S1) als linearer, relativ zum Ende (10e) geneigter Schlitz ausgebildet ist, so dass der erste Schlitz (S1) näher am Ende (10e) liegt, wenn man ihn vom ersten Punkt (P1) zum zweiten Punkt (P2) verfolgt.

2. Das Laserschneidverfahren gemäß Anspruch 1, wobei eine Spitze eines Strahlflecks während der Bildung des zweiten Schlitzes (S2) innerhalb des Schnittspaltbildungsbereichs (Rs10, Rs20) positioniert ist.

3. Das Laserschneidverfahren gemäß Anspruch 2, wobei
ein von dem ersten Schlitz (S1), dem zweiten Schlitz (S2) und dem Schnittspalt (S10, S20) umgebener Bereich ein Anpressstück (11) bildet, und
bei der Bildung des Schnittspalts (S10, S20) ein freies Ende (112) des Anpressstücks (11) in Richtung des Endes (10e) gebogen wird, um das Teil (10, 20) anzupressen, und mit dem Teil (10, 20) verschweißt wird.

## Revendications

1. Procédé de découpe par laser comprenant :
la formation, au niveau de chacune d'une pluralité de positions sur une périphérie externe ou une périphérie interne d'une pièce (10, 20) devant être découpée dans une tôle métallique (W), d'une première fente (S1) par découpe, avec un faisceau laser, de la tôle métallique (W)
**caractérisé en ce que** :
la découpe au faisceau laser est effectuée à partir d'un premier point (P1) qui est distant d'une extrémité (10e) de la pièce (10, 20) dans une direction allant vers l'extérieur de la pièce (10, 20) d'une première distance (Db), jusqu'à un second point (P2) qui est distant de l'extrémité (10e) dans la direction allant vers l'extérieur de la pièce (10, 20) d'une deuxième distance (Dc) plus courte que la première distance (Db) et qui est distant du premier point (P1) dans une direction le long de l'extrémité (10e) d'une troisième distance (L) ;
la formation d'une seconde fente (S2) par découpe de la tôle métallique (W) avec le faisceau laser, afin d'amener la seconde fente (S2) à s'étendre à partir du second point (P2) en direction de l'extrémité (10e) et à atteindre une région de formation de trait de coupe (Rs10, Rs20) où est formé un trait de coupe (S10, S20) permettant de découper la périphérie extérieure ou la périphérie intérieure ; et
la découpe de la tôle métallique (W) avec le faisceau laser le long de l'extrémité, afin de former le trait de coupe (S10, S20) dans la région de formation de trait de coupe (Rs10, Rs20),
dans lequel la première fente (S1) est formée en tant que fente rectiligne inclinée par rapport à l'extrémité (10e), de sorte que la première fente (S1) se trouve plus près de l'extrémité (10e) lorsqu'elle est tracée à partir du premier point (P1) jusqu'au second point (P2).

2. Procédé de découpe par laser selon la revendication 1, dans lequel une pointe d'un spot laser pendant la formation de la seconde fente (S2) est positionnée à l'intérieur de la région de formation de trait de coupe (Rs10, Rs20).

3. Procédé de découpe par laser selon la revendication 2, dans lequel
une région entourée par la première fente (S1), la seconde fente (S2) et le trait de coupe (S10, S20) forme une partie de pression (11), et
lorsque le trait de coupe (S10, S20) est formé, une extrémité libre (112) de la partie de pression (11) est pliée en direction de l'extrémité (10e) afin de presser la pièce (10, 20) et elle est soudée à la pièce (10, 20).
